# EUROPÄISCHE PATENTANMELDUNG

(11) **EP 3 747 927 A1**
(43) Veröffentlichungstag der Anmeldung: **09.12.2020**
(21) Anmeldenummer: 19178310.9
(22) Anmeldetag: 05.06.2019
(51) Int. Cl.: C08G 65/26

(54) **VERFAHREN ZUR KONTINUIERLICHEN HERSTELLUNG VON POLYOXYALKYLENPOLYOLEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft ein Verfahren zur Herstellung eines Polyoxyalkylenpolyols umfassend die Anlagerung eines Alkylenoxids an eine H-funktionelle Startersubstanz in Gegenwart eines Doppelmetallcyanid (DMC)-Katalysators, wobei das Alkylenoxid mit dem Massenstrom *ṁ*(*Alkylenoxid*), die H-funktionelle Startersubstanz mit dem Massenstrom *ṁ*(*Startersubsanz*) und der Doppelmetallcyanid (DMC)-Katalysator in einem Dispersionsmittel mit dem Massenstrom *ṁ*(*DMC*) während der Reaktion kontinuierlich in den Reaktor mit dem Reaktionsvolumen V dosiert werden und das resultierende Reaktionsgemisch kontinuierlich aus dem Reaktor entfernt wird, und wobei der Quotient der Summe der Massenströme ∑*ṁ* aus *ṁ*(*Alkylenoxid*), *ṁ*(*Startersubsanz*) und *ṁ*(*DMC*) zu dem Reaktionsvolumen V im stationären Zustand größer oder gleich 1200 g/(h·L) ist. Ein weiterer Gegenstand sind die nach dem erfindungsgemäßen Verfahren erhältlichen Polyoxyalkylenpolyole.

## Beschreibung

Gegenstand der vorliegenden Erfindung ist ein Verfahren zur Herstellung eines Polyoxyalkylenpolyols umfassend die Anlagerung eines Alkylenoxids an eine H-funktionelle Startersubstanz in Gegenwart eines Doppelmetallcyanid (DMC)-Katalysators, wobei das Alkylenoxid mit dem Massenstrom *ṁ*(*Alkylenoxid*), die H-funktionelle Startersubstanz mit dem Massenstrom *ṁ*(*Startersubsanz*) und der Doppelmetallcyanid (DMC)-Katalysator in einem Dispersionsmittel mit dem Massenstrom *ṁ*(*DMC*) während der Reaktion kontinuierlich in den Reaktor mit dem Reaktionsvolumen V dosiert werden und das resultierende Reaktionsgemisch kontinuierlich aus dem Reaktor entfernt wird, und wobei der Quotient der Summe der Massenströme ∑*ṁ* aus *ṁ*(*Alkylenoxid*), *ṁ*(*Startersubsanz*) und *ṁ*(*DMC*) zu dem Reaktionsvolumen V im stationären Zustand größer oder gleich 1200 g/(h·L) ist. Ein weiterer Gegenstand sind die nach dem erfindungsgemäßen Verfahren erhältlichen Polyoxyalkylenpolyole.

WO 98/03571 offenbart ein kontinuierliches Verfahren zur Herstellung von Polyoxyalkylenpolyolen mit kontinuierlicher Dosierung von Startersubstanzen unter Verwendung von DMC-Katalysatoren. Die beschriebenen Verweilzeiten liegen dabei zwischen 50 und 315 Minuten bei einer Reaktionstemperatur von 130°C, wobei sich die resultierenden Polyetherpolyole durch einen niedrigen Unsättigungsgrad sowie eine niedrige Polydispersität auszeichnen.

WO 2005/047365 A1 beschreibt ebenfalls ein kontinuierliches Verfahren zur Herstellung von Polyetherpolyolen in Gegenwart von DMC-Katalysatoren, wobei Startersubstanz und Alkylenoxide in einer solchen Menge zudosiert werden, dass der Füllstand im Reaktor konstant bleibt und DMC-Katalysator so zudosiert wird, dass die für den kontinuierlichen Betrieb des Reaktors notwendige Katalysatorkonzentration im Reaktor erhalten bleibt. Die in den Beispielen beschriebenen mittleren Verweilzeiten liegen bei 100 Minuten.

In EP 1 469 027 A1 wird ein Verfahren zur kontinuierlichen Polyetherpolyol-Herstellung mittels DMC-Katalyse offenbart, wobei im Reaktor kein Gasphasenanteil vorliegt. Die in den Beispielen beschriebenen Verweilzeiten liegen bei ca. 60 Minuten.

WO 2006/002807 A1 beschreibt ein 2-stufiges Verfahren zur kontinuierlichen Herstellung von Polyetherpolyolen mittel DMC-Katalyse, wobei in den ersten Reaktor Epoxide, Startersubstanz und DMC-Katalysator dosiert werden, und in den anschließenden, zweiten Reaktor nur Epoxide (und ggf. weiterer DMC-Katalysator) dosiert werden. Die in den Beispielen beschriebenen Verweilzeiten liegen bei etwa 100 Minuten.

WO 2007/009905 A1 offenbart ein Verfahren zur 2-stufigen, kontinuierlichen Herstellung von Polyetherpolyolen mittels DMC-Katalyse, wobei im ersten Schritt in einem kontinuierlich arbeitenden Reaktor Epoxide an Startersubstanzen angelagert werden, und der Produktaustrag aus diesem Reaktor in einem zweiten Schritt zur Abreaktion der Epoxide in einen sogenannten Kompartmentreaktor überführt wird. Die Verweilzeiten im ersten Reaktor (CSTR) liegen dabei bei 60 Minuten.

WO 2009/143103 A1 beschreibt ein kontinuierliches Verfahren zur DMC-katalysierten Herstellung von Polyetherpolyolen in einem Kreislaufreaktorsystem, wobei die angegebenen Verweilzeiten zwischen 90 und 180 Minuten liegen.

WO 2011/075333 A1 offenbart ein 2-stufiges kontinuierliches Verfahren für Polyetherpolyole mit niedriger Äquivalentmolmasse (< 500) in Gegenwart von DMC-Katalysatoren, wobei die angegebenen Reaktorverweilzeiten im Bereich von mehreren Stunden liegen.

WO 2014/159551 A1 offenbart einen verbesserten kontinuierlichen Prozess zur DMC-katalysierten Herstellung von kurzkettigen Polyetherpolyolen im OHZ-Bereich von 400 - 112, wobei die beschriebenen Verweilzeiten bei 2,5 Stunden (150 Minuten) liegen.

WO 2018/026571 A1 beschreibt ein Verfahren zur kontinuierlichen DMC-katalysierten Herstellung von Polyetherpolyolen mit Wärmerückgewinnung. Hierbei wird durch eine effiziente Entfernung der Reaktionswärme aus der exothermen Alkoxylierungsreaktion eine Erhöhung der Raum-Zeit-Ausbeute und damit der Anlagenkapazität ermöglicht, ohne dass sich hierbei die Produktqualität ändert. Die in den Patentbeispielen angegebenen Raum-Zeit-Ausbeuten von maximal 653 g/(L h) entsprechen einer minimalen Reaktorverweilzeit von ca. 90 Minuten.

Ausgehend vom Stand der Technik bestand die Aufgabe der vorliegenden Erfindung darin, ein verbessertes Verfahren zur Herstellung von Polyoxyalkylenpolyolen bereitzustellen, bei dem die Prozesseffizienz, d.h. die pro Zeiteinheit herstellbare Polyoxyalkylenpolyolmenge erhöht werden kann, ohne dass sich die Produktqualität der resultierenden Polyoxyalkylenpolyole verschlechtert oder auch mehr Katalysator verwendet werden muss, welcher ggf. nachfolgend abgetrennt werden müsste. Im Speziellen sollen die Polyoxyalkylenpolyole mit einer vergleichbar engen Molmassenverteilung mit einem Polydispersitätsindex (PDI) von ≤1.20, und/oder vergleichbar niedrigen Viskositäten im Vergleich zu dem aus dem Stand der Technik vorbeschriebenen Herstellungsverfahren bereitgestellt werden. Eine Erhöhung der Prozesseffizienz ist vorteilhaft , da es die Herstellung von mehr Polyoxyalkylenpolyol pro Zeiteinheit ermöglicht bzw. die Verwendung kleinerer Reaktoren, um vergleichbare Polyoxyalkylenpolyolmengen pro Zeiteinheit herzustellen.

Überraschenderweise konnte die Aufgabe gelöst werden durch ein Verfahren zur Herstellung eines Polyoxyalkylenpolyols umfassend die Anlagerung eines Alkylenoxids an eine H-funktionelle Startersubstanz in Gegenwart eines Doppelmetallcyanid (DMC)-Katalysators, wobei das Alkylenoxid mit dem Massenstrom *ṁ*(*Alkylenoxid*), die H-funktionelle Startersubstanz mit dem Massenstrom *ṁ*(*Startersubsanz*) und der Doppelmetallcyanid (DMC)-Katalysator in einem Dispersionsmittel mit dem Massenstrom *ṁ*(*DMC*) während der Reaktion kontinuierlich in den Reaktor mit dem Reaktionsvolumen V dosiert werden und das resultierende Reaktionsgemisch kontinuierlich aus dem Reaktor entfernt wird, und wobei der Quotient der Summe der Massenströme ∑*ṁ* aus *ṁ*(*Alkylenoxid*), *ṁ*(*Startersubsanz*) und *ṁ*(*DMC*) zu dem Reaktionsvolumen V im stationären Zustand größer oder gleich 1200 g/(h·L) ist.

Der stationäre Zustand, d.h. der stationäre Betriebszustand des Reaktors im kontinuierlichen Betrieb ist gemäß des allgemeinen Fachwissens dadurch gekennzeichnet, dass keine zeitliche Änderung der Prozessgrößen wie Druck, Temperatur sowie der Produkteigenschaften wie beispielsweise der Viskosität und der Polydispersität mehr auftritt. Eine Änderung einer Prozessgröße wie beispielsweise des Volumenstromes einer oder mehrerer Eduktkomponenten oder der Temperatur führt nach einer Übergangsphase typischerweise zu einem neuen, vom ersten stationären Zustand abweichenden zweiten stationären Zustand mit möglichen anderen Produkteigenschaften. Für das erfindungsgemäße Verfahren wird der stationäre Zustand typischerweise nach sechs bis acht Verweilzeiten erreicht, wobei unter der Verweilzeit der Quotient aus dem Reaktionsvolumen und dem austretenden Volumenstrom zu verstehen ist.

Im erfindungsgemäßen Verfahren sind unter Polyoxyalkylenpolyolen Anlagerungsprodukte von einem oder mehreren Alkylenoxiden und optional einem oder mehreren Co-Monomeren wie beispielsweise CO₂ und/oder cyclischen Anhydriden an eine oder mehrere H-funktionelle Startersubstanz in Gegenwart des Doppelmetallcyanid (DMC)-Katalysators zu verstehen, wobei Polyetherpolyole, Polyetheresterpolyole, Polycarbonatpolyole, Polyethercarbonatpolyole oder Polyetherestercarbonatpolyole erhältlich sind.

In einer bevorzugten Ausführungsform des erfindungsgemäßen Verfahrens ist das Polyoxyalkylenpolyol ein Polyetherpolyol, wobei das Polyetherpolyol durch Anlagerung von einem oder mehreren Alkylenoxiden an eine oder mehrere H-funktionelle Startersubstanzen in Gegenwart des Doppelmetallcyanid (DMC)-Katalysators erhältlich ist.

Gemäß der fachlich gängigen Definition ist unter einem Massenstrom ṁ die Masse eines Mediums, wie beispielsweise Alkylenoxid oder H-funktionelle Startersubstanz, welche sich pro Zeiteinheit durch einen Querschnitt bewegt, zu verstehen. Der Massenstrom wird typischerweise in der Einheit Kilogramm pro Sekunde oder auch in Gramm pro Stunde angegeben.

Das Reaktorvolumen V_{R} ist das zugängliche Innenvolumen eines Reaktors. Hierzu zählen beispielsweise im Falle eines Rührkesselreaktors neben dem freien Innenvolumen des Rührkessels (freies Volumen unter Berücksichtigung von Einbauten) auch das reaktionsseitige Volumen eines externen Wärmetauscherkreislaufs, der mit dem Rührkessel verbunden ist. Das Reaktorvolumen V_{R} kann beispielsweise durch vollständiges Befüllen des Reaktors mit einer Flüssigkeit bekannter Dichte und anschließende Bestimmung der Masse dieser Flüssigkeit bestimmt werden ("Auslitern").

Das Reaktionsvolumen V ist der vom flüssigen Reaktionsmedium eingenommene Teil des Reaktorvolumens V_{R}. Beim Vorliegen einer Gasphase mit dem Volumen V_{G} ist das Reaktorvolumen V_{R} die Summe aus Reaktionsvolumen V und dem Volumen der Gasphase V_{G}. Ein kontinuierlicher Reaktor zur Herstellung von Polyoxyalkylenpolyolen kann so betrieben werden, dass sich praktisch keine freie Gasphase im Reaktor befindet. Vorzugsweise wird dies dadurch erreicht, dass der austretende Flüssigkeitsstrom den Reaktor am höchsten Punkt verlässt. Im Falle eines solchen vollständig gefluteten Reaktors, also eines Reaktors ohne substantiellen Anteil einer Gasphase, entspricht das Reaktionsvolumen V dem Reaktorvolumen V_{R}, was einem "liquid-sealed state" des Reaktors gemäß EP 1 469 027 A1 entspricht.

In einer bevorzugten Ausführungsform des erfindungsgemäßen Verfahrens ist das Reaktionsvolumen V identisch mit dem Reaktorvolumen V_{R}.

In einer bevorzugten Ausführungsform ist der Quotient der Summe der eintretenden Massenströme ∑*ṁ* aus *ṁ*(*Alkylenoxid*), *ṁ*(*Startersubsanz*) und *ṁ*(*DMC*) zu dem Reaktionsvolumen V im stationären Zustand größer oder gleich 1500 g/(h·L), bevorzugt größer oder gleich 1800 g/(h·L).

In einer weiteren bevorzugten Ausführungsform ist der Quotient der Summe der Massenströme ∑*ṁ* aus *ṁ*(*Alkylenoxid*), *ṁ*(*Startersubsanz*) und *ṁ*(*DMC*) zu dem Reaktionsvolumen V im stationären Zustand kleiner oder gleich 4000 g/(h·L) bevorzugt 3750 g/(h·L) und besonders bevorzugt 3500 g/(h·L).)

In einer besonders bevorzugten Ausführungsform des erfindungsgemäßen Verfahrens ist der Quotient der Summe der Massenströme ∑*ṁ* aus *ṁ*(*Alkylenoxid*), *ṁ*(*Startersubsanz*) und *ṁ*(*DMC*) zu dem Reaktionsvolumen V im stationären Zustand 1200 g/(h·L) bis 4000 g/(h·L) bevorzugt 1500 g/(h·L) bis 3750 g/(h·L) und besonders bevorzugt von 1800 g/(h·L) bis 3500 g/(h·L).

Für das erfindungsgemäße Verfahren geeignete DMC-Katalysatoren sind im Prinzip aus dem Stand der Technik bekannt (siehe z.B. US-A 3 404 109, US-A 3829505, US-A 3941849 und US- A 5158922). DMC-Katalysatoren, die z.B. in US-A 5470813, EP-A 700949, EP-A 743093, EP-A 761708, WO 97/40086, WO 98/16310 und WO 00/47649 beschrieben sind, besitzen eine sehr hohe Aktivität in der Polymerisation von Alkylenoxiden und ermöglichen die Herstellung von Polyoxyalkylenpolyolen unter optimalen Bedingungen bei sehr geringen Katalysatorkonzentrationen (100 ppm oder weniger), so dass eine Abtrennung des Katalysators aus dem fertigen Produkt im Allgemeinen nicht mehr erforderlich ist. Ein typisches Beispiel sind die in EP-A 700949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch eine Polyoxyalkylenverbindung mit einem zahlenmittleren Molekulargewicht größer als 500 g/mol enthalten. Es ist auch möglich, die in EP Anmeldenummer 10163170.3 offenbarten alkalischen DMC-Katalysatoren einzusetzen.

In einer Ausführungsform des erfindungsgemäßen Verfahrens ist der Doppelmetallcyanid (DMC)-Katalysator durch Umsetzung einer wässrigen Lösung eines cyanidfreien Metallsalzes, einer wässrigen Lösung eines Metallcyanidsalzes, eines organischen Komplexliganden sowie einer komplexbildenden Komponente erhältlich.

Zur Herstellung der Doppelmetallcyanid-Verbindungen geeignete cyanidfreie Metallsalze besitzen bevorzugt die allgemeine Formel (I),

M(X)ₙ (I)

wobei
M ausgewählt ist aus den Metallkationen Zn²⁺, Fe²⁺, Ni²⁺, Mn²⁺, Co²⁺, Sr²⁺, Sn²⁺, Pb²⁺ und, Cu²⁺, bevorzugt ist M Zn²⁺, Fe²⁺, Co²⁺ oder Ni²⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Cyanat, Thiocyanat, Isocyanat, Isothiocyanat oder Nitrat ist,
oder geeignete cyanidfreie Metallsalze besitzen die allgemeine Formel (II),

Mᵣ(X)₃ (II)

wobei
M ausgewählt ist aus den Metallkationen Fe³⁺, Al³⁺ und Cr³⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalate ist und
r ist 1, wenn X = Halogenid, Hydroxid, Cyanat, Thiocyanat, Isocyanat, Isothiocyanat, Carboxylat oder Nitrat ist,
oder geeignete cyanidfreie Metallsalze besitzen die allgemeine Formel (III),

M(X)ₛ (III)

wobei
M ausgewählt ist aus den Metallkationen Mo⁴⁺, V⁴⁺ und W⁴⁺
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Cyanat, Thiocyanat, Isocyanat, Isothiocyanat, Carboxylat oder Nitrat ist,
oder geeignete cyanidfreie Metallsalze besitzen die allgemeine Formel (IV),

M(X)ₜ (IV)

wobei
M ausgewählt ist aus den Metallkationen Mo⁶⁺ und W⁶⁺
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Cyanat, Thiocyanat, Isocyanat, Isothiocyanat, Carboxylat oder Nitrat ist,
Beispiele geeigneter cyanidfreier Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen-(II)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (V)

(Y)ₐM'(CN)_{b}(A)_{c} (V)

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. Li⁺, Na⁺, K⁺, Rb⁺, Cs⁺) und Erdalkalimetall (d.h. Be²⁺, Ca²⁺, Mg²⁺, Sr²⁺, Ba²⁺),
A ausgewählt ist aus einem oder mehreren Anionen der Gruppe bestehend aus Halogeniden (d..h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den DMC-Katalysatoren enthalten sind, sind Verbindungen der allgemeinen Formel (VI)

Mₓ[M'ₓ,(CN)_{y}]_{z} (VI),

worin M wie in Formel (I) bis (IV) und
M' wie in Formel (V) definiert ist, und
x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

In einer bevorzugten Ausführungsform des erfindungsgemäßen Verfahrens ist die Doppelmetallcyanid-Verbindung eine oder mehrere Verbindung(en) und wird ausgewählt aus der Gruppe bestehend aus Zinkhexacyano¬cobaltat(III), Zink¬hexacyanoiridat(III), Zinkhexacyanoferrat(III) und Cobalt(II)hexa¬cyanocobaltat(III). Besonders be¬vorzugt verwendet wird Zinkhexacyanocobaltat(III).

Die bei der Herstellung der DMC-Katalysatoren zugesetzten organischen Kom¬plex¬liganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbin¬dungen mit Heteroatomen, wie Sauerstoff, Stickstoff, Phosphor oder Schwefel, die mit der Dop¬pelmetallcyanid-Ver¬bin¬dung Komplexe bilden können, eingesetzt. Bevorzugte organische Komplexliganden sind Alkohole, Aldehyde, Ketone, Ether, Ester, Amide, Harn¬stoffe, Nitrile, Sulfide und deren Mi¬schungen. Besonders bevorzugte organische Komplexligan¬den sind aliphatische Ether (wie Dimethoxyethan), wasserlösliche aliphatische Alkohole (wie Ethanol, Isopropanol, n-Butanol, iso-Butanol, sek.-Buta¬nol, tert.-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Kom¬plexliganden sind ausgewählt aus einer oder mehrerer Verbindungen der Gruppe bestehend aus Dimethoxyethan, tert.-Butanol, 2-Methyl-3-buten-2-ol, 2-Methyl-3-butin-2-ol, Ethylenglykol-mono-tert.-butylether und 3-Methyl-3-oxetan-methanol.

In einer bevorzugten Ausführungsform des erfindungsgemäßen Verfahrens ist der organische Komplexligand eine oder mehrere Verbindung(en) und wird ausgewählt aus der Gruppe bestehend aus Dimethoxyethan, tert.-Butanol, 2-Methyl-3-buten-2-ol, 2-Methyl-3-butin-2-ol, Ethylenglykol-mono-tert.-butylether und 3-Methyl-3-oxetan-methanol, bevorzugt tert.-Butanol.

Bei dem erfindungsgemäßen Verfahren können zur Herstellung der DMC-Katalysatoren eine oder mehrere komplexbildende Komponente(n) aus den Verbindungsklassen der Poly¬ether, Polyester, Polycarbonate, Polyalkylen¬glykolsorbitanester, Polyalkylen¬glykolglycidylether, Polyacrylamid, Poly¬(acrylamid-co-acryl¬säure), Poly¬acryl¬säure, Poly(acrylsäure-co-maleinsäure), Polyacrylnitril, Poly¬alkyl¬acrylate, Polyalkylmethacrylate, Polyvinyl¬methyl¬ether, Polyvinyl¬ethyl-ether, Polyvinylacetat, Polyvinylalkohol, Poly-N-vinyl¬pyrrolidon, Poly(N-vinyl¬¬pyrrolidon-co-acrylsäure), Polyvinylmethyl¬keton, Poly(4-vinylphenol), Poly¬(acrylsäure-co-styrol), Oxazolinpolymere, Poly¬alkylenimine, Malein¬säure- und Maleinsäureanhydridcopolymere, Hydroxy¬ethylcellulose und Poly¬¬acetale, oder der Glycidylether, Glycoside, Carbonsäureester mehrwertiger Alkohole, Ester oder Amide, Cyclodextrine oder Phosphorverbindungen eingesetzt werden.

Bevorzugt werden im erfindungsgemäßen Verfahren die komplexbildende Komponente(n) zur Herstellung der DMC-Katalysatoren eingesetzt.

Bei dem erfindungsgemäßen Verfahren werden zur Herstellung der DMC-Katalysatoren als komplexbildende Komponente bevorzugt Poly¬ether eingesetzt.

In einer bevorzugten Ausführungsform weist der Polyether ein zahlenmittleres Molekulargewicht von ≥ 500 g/mol auf, wobei das zahlenmittlere Molekulargewicht aus der ermittelten OH-Zahl berechnet wird.

Geeignete Polyether beinhalten solche, die mittels Ringöffnungspolymerisation von cyclischen Ethern hergestellt werden, wobei diese cyclischen Ether beispielsweise auch Oxetan und auch Tetrahydrofuran umfassen. Jegliche Katalyse ist hierfür möglich. Der Polyether weist hierbei geeignete Endgruppen auf, wie beispielsweise Hydroxyl-, Amin-, Ester- oder Ether-Endgruppen.

In einer besonders bevorzugten Ausführungsform weist der Polyether eine durchschnittliche Hydroxylfunktionalität von 2 bis 8 und ein zahlenmittleres Molekulargewicht im Bereich von 500 g/mol bis 10.000 g/mol, bevorzugt von 700 g/mol bis 5.000 g/mol auf, wobei das zahlenmittlere Molekulargewicht aus der ermittelten OH-Zahl berechnet wird.

In einer Ausführungsform des erfindungsgemäßen Verfahrens ist die komplexbildende Komponente ein Polyetherpolyol, wobei die Polyetherpolyole durch Umsetzung von Alkylenoxiden und H-funktionellen Startersubstanzen in Gegenwart von sauren, basischen und/oder metallorganischen Katalysatoren erhalten werden. Diese metallorganischen Katalysatoren sind beispielsweise Doppelmetallcyanid (DMC) - Katalysatoren.

Geeignete Polyetherpolyole sind Poly(oxypropylen)polyole, Poly(oxypropylenoxyethylen)polyole, Polytetramethylenetherglykole sowie Blockcopolymere enthaltend Poly(oxy)ethylen, Poly(oxy)propylen und/oder Poly(oxy)butylen Blöcke wie beispielsweise Poly(oxy)ethylen-Poly(oxy)propylen-Blockcopolymere mit terminalen Poly(oxy)ethylen Blöcken.

In einer bevorzugten Ausführungsform ist das Polyetherpolyol ein Poly(oxypropylen)polyol mit einem zahlenmittleren Molekulargewicht von ≥ 500 g/mol, wobei das zahlenmittlere Molekulargewicht aus der ermittelten OH-Zahl berechnet wird.

In einer besonders bevorzugten Ausführungsform ist das Polyetherpolyol ein Poly(oxypropylen)polyol, bevorzugt ein Poly(oxypropylen)diol und/oder ein Poly(oxypropylen)triol mit einem zahlenmittleren Molekulargewicht von 700 g/mol bis 4000 g/mol, wobei das zahlenmittlere Molekulargewicht aus der ermittelten OH-Zahl berechnet wird.

In einer alternativen Ausführungsform haben die Polyether eine durchschnittliche Hydroxylfunktionalität von 2 bis 8 und ein zahlenmittleres Molekulargewicht im Bereich von 150 g/mol bis kleiner 500 g/mol, bevorzugt von 200 g/mol bis 400 g/mol, wobei das zahlenmittlere Molekulargewicht aus der ermittelten OH-Zahl berechnet wird.

Geeignete alternative Polyetherpolyole sind Poly(oxypropylen)polyole, Poly(oxypropylenoxyethylen)polyole, Polytetramethylenetherglykole sowie Blockcopolymere enthaltend Poly(oxy)ethylen, Poly(oxy)propylen und/oder Poly(oxy)butylen Blöcke wie beispielsweise Poly(oxy)ethylen-Poly(oxy)propylen-Blockcopolymere mit terminalen Poly(oxy)ethylen Blöcken. Weiterhin sind auch Tripropylenglykol, Triethylenglykol, Tetrapropylenglykol, Tetraethylenglykol, Dipropylenglykolmonomethylether, Tripropylenglykolmonomethylether, sowie Monoalkyl- und Dialkylether von Glykolen und Poly(alkylenglykol)en geeignet.

In einer besonders bevorzugten alternativen Ausführungsform ist das alternative Polyetherpolyol ein Polypropylenglykol und/oder ein Polyethylenglykol mit einem zahlenmittleren Molekulargewicht im Bereich von 150 g/mol bis kleiner 500 g/mol, wobei das zahlenmittlere Molekulargewicht aus der ermittelten OH-Zahl berechnet wird.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, (also mindestens ein molares Verhältnis von cyanidfreiem Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, so dass sich eine Suspension bildet, die die Doppelmetallcyanid-Verbindung (z.B. Zinkhexacyanocobaltat), Wasser, überschüssiges cyanidfreies Metallsalz, und den organischen Komplexliganden enthält. Der organische Komplexligand kann dabei in der wässrigen Lösung des cyanidfreien Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des cyanidfreien Metallsalzes und des Metallcyanidsalzes und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante zur Herstellung des Katalysators wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Massen-%, bezogen auf die Gesamtlösung.

Optional wird im dritten Schritt der wässrigen Waschlösung eine oder mehrere weitere komplexbildende Komponente(n), bevorzugt im Bereich zwischen 0,5 und 5 Massen-%, bezogen auf die Gesamtlösung, zugefügt.

Außerdem ist es vorteilhaft, den isolierten Feststoff mehr als einmal zu waschen. Hierzu kann z.B. der erste Waschvorgang wiederholt werden. Bevorzugt ist es aber, für weitere Waschvorgänge nicht wässrige Lösungen zu verwenden, z.B. eine Mischung aus organischem Komplexliganden und weiterer komplexbildender Komponente.

Der isolierte und gegebenenfalls gewaschene Feststoff wird anschließend, gegebenenfalls nach Pulverisierung, bei Temperaturen von im allgemeinen 20 - 100 °C und bei absoluten Drücken von im allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

In einer Ausführungsform des erfindungsgemäßen Verfahren beträgt die Konzentration des Doppelmetallcyanid (DMC)-Katalysator 50 ppm oder weniger, bevorzugt 10 ppm bis 50 ppm, besonders bevorzugt 15 ppm bis 40 ppm, bezogen auf Summe aus Alkylenoxid, H-funktioneller Startersubstanz, Dispersionsmittel und Doppelmetallcyanid (DMC)-Katalysator, wodurch einerseits eine ausreichend hohe katalytische Aktivität bei guter Polyoxyalkylenpolyol-Produktqualität resultiert und andererseits der Katalysator für die weitere Verarbeitung des Polyoxyalkylenpolyols nicht abgetrennt werden muss.

Vorzugsweise verbleibt der DMC-Katalysator im Endprodukt, er kann jedoch auch abgetrennt werden, beispielsweise durch Behandlung mit Adsorbentien. Verfahren zur Abtrennung von DMC-Katalysatoren sind beispielsweise beschrieben in US-A 4987271, DE-A 3132258, EP-A 406440, US-A 5391722, US-A 5099075, US-A 4721818, US-A 4877906 und EP-A 385619.

In dem erfindungsgemäßen Verfahren für die Herstellung der Polyoxyalkylenpolyole wird mindestens eine H-funktionelle Startersubstanz eingesetzt.

Als geeignete H-funktionelle Startersubstanzen (Starter) können Verbindungen mit für die Alkoxylierung aktiven H-Atomen eingesetzt werden. Für die Alkoxylierung aktive Gruppen mit aktiven H-Atomen sind beispielsweise -OH, -NH2 (primäre Amine), -NH- (sekundäre Amine), - SH und -CO2H, bevorzugt sind -OH und -NH2, besonders bevorzugt ist -OH. Als H-funktionelle Startersubstanz können beispielsweise eine oder mehrere Verbindungen ausgewählt werden aus der Gruppe umfassend ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert.-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als mono funktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydro-phthalsäure¬anhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des Weiteren können als H-funktionelle Startersubstanzen Polycarbonatdiole eingesetzt werden, insbesondere solche mit einem Molekulargewicht Mn im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der CovestroAG verwendet werden, wie z.B. Desmophen® C 1100 oder Desmophen® C 2200.

In einer weiteren Ausführungsform der Erfindung können Polyethercarbonatpolyole und/oder Polyetherestercarbonatpolyole als H-funktionelle Startersubstanzen eingesetzt werden. Insbesondere können Polyetherestercarbonatpolyole eingesetzt werden. Diese als H-funktionelle Startersubstanzen eingesetzten Polyetherestercarbonatpolyole können hierzu in einem separaten Reaktionsschritt zuvor hergestellt werden.

Die H-funktionellen Startersubstanzen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole mit einer Zusammensetzung nach der allgemeinen Formel (VII),

HO-(CH2)X-OH (VII)

wobei x eine Zahl von 1 bis 20, bevorzugt eine gerade Zahl von 2 bis 20 ist. Beispiele für Alkohole gemäß Formel (VII) sind Ethylenglykol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (VII) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startersubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindung(en) ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylol¬propan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt eine OH-Funktionalität von 2 bis 4 und ein Molekulargewicht Mn im Bereich von 106 bis 4500 g/mol und insbesondere ein Molekulargewicht Mn im Bereich von 106 bis 3000 g/mol.

Gemäß der allgemeinen fachlichen Definition handelt es sich bei einem Dispersionsmittel (Dispergens) um eine kontinuierliche Phase, worin eine zweite, nicht oder kaum lösliche dispergierte Phase, beispielsweise der Doppelmetallcyanid (DMC)-Katalysator), vorliegt.

In einer Ausführungsform des erfindungsgemäßen Verfahrens entspricht das für die Zufuhr des DMC-Katalysators eingesetzte Dispersionsmittel der bereits beschriebenen H-funktionellen Startersubstanz. In einer bevorzugten Ausführungsform ist das Dispersionsmittel eine oder mehrere Verbindung(en) und wird ausgewählt wird aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylol¬propan, di- und trifunktionelle Polyetherpolyole.

In eine alternativen, weniger bevorzugten Ausführungsform des erfindungsgemäßen Verfahrens umfasst die DMC-Katalysator-Dispersion den DMC-Katalysator und das Dispersionsmittel, wobei das Dispersionsmittel eine oder mehrere Verbindung(en) ist und ausgewählt wird aus der Gruppe bestehend aus 4-Methyl-2-oxo-1,3-dioxolan, 1,3-Dioxolan-2-on, Aceton, Methylethylketon, Acetonitril, Nitromethan, Dimethyl¬sulf¬oxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol und Tetra¬chlor-kohlenstoff.

Für das erfindungsgemäße Verfahren weist das mindestens eine Alkylenoxid 2 bis 24 Kohlenstoffatome auf. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan.

Im erfindungsgemäßen Verfahren werden als Alkylenoxid bevorzugt Ethylenoxid, Propylenoxid oder ein Gemisch aus Ethylenoxid und Propylenoxid eingesetzt. Werden Gemische aus Ethylenoxid und Propylenoxid eingesetzt, weisen diese bevorzugt bis zu 75 Massen-% Ethylenoxid, besonders bevorzugt bis zu 50 Massen-% Ethylenoxid und ganz besonders bevorzugt bis zu 30 Massen-% Ethylenoxid bezogen auf die Gesamtmasse des Gemisches aus Ethylenoxid und Propylenoxid auf. Besonders bevorzugt wird ausschließlich Propylenoxid eingesetzt sowie Gemische aus Ethylenoxid und Propylenoxid mit bis zu 30 Massen-% Ethylenoxid bezogen auf die Gesamtmasse des Gemisches aus Ethylenoxid und Propylenoxid. Die Alkylenoxide können dem Reaktor als Einzelkomponenten oder als Gemisch zugeführt werden. Es ist ebenfalls möglich mehrere Alkylenoxide dem Reaktor nacheinander zuzuführen, womit sich Polyoxyalkylenketten mit Blockstruktur realisieren lassen. Bei der Dosierung mehrerer Alkylenoxide ist es möglich die Zusammensetzung des zugeführten Alkylenoxidstroms kontinuierlich oder instantan zu ändern.

Weitere nach dem erfindungsgemäßen Verfahren mit Alkylenoxiden unter DMC-Katalyse copolymerisierbare Monomere sind beispielsweise aliphatische Lactone, aromatische Lactone, Lactide, cyclische Carbonate mit bevorzugt mindestens drei gegebenenfalls substituierten Methylengruppen zwischen den Sauerstoffatomen der Carbonatgruppe, aliphatische cyclische Anhydride und aromatische cyclische Anhydride und Kohlendioxid.

Aliphatische oder aromatische Lactone sind cyclische Verbindungen enthaltend eine Esterbindung im Ring. Bevorzugte Verbindungen sind 4-gliedrige Ringlactone wie β-Propiolacton, β-Butyrolacton, β-Isovalerolacton, β-Caprolacton, β-Isocaprolacton, β-Methyl-β-valerolacton, 5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on, 7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4S)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5S,7S)-5-Methyl-7-(propan-2-yl)oxepan-2-on, 4-Methyl-7-(propan-2-yl)oxepan-2-on, und höhergliedrige Ringlactone, wie (7E)-Oxacycloheptadec-7-en-2-on.

Lactide sind cyclische Verbindungen enthaltend zwei oder mehr Esterbindungen im Ring. Bevorzugte Verbindungen sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxan-2,5-dion, 3,6-Di(but-3-en-1-yl)-1,4-dioxan-2,5-dion (jeweils einschließlich optisch aktiver Formen). Besonders bevorzugt ist L-Lactid.

Als cyclische Carbonate werden vorzugsweise Verbindungen mit mindestens drei gegebenenfalls substituierten Methylengruppen zwischen den Sauerstoffatomen der Carbonatgruppe eingesetzt. Bevorzugte Verbindungen sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiol¬carbonat, 2-Methyl-1,3-propandiolcarbonat, 2,4-Pentandiolcarbonat, 2-Methylbutan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens nicht oder nur zu einem geringen Anteil in die Polymerkette eingebaut.

Cyclische Anhydride sind cyclische Verbindungen enthaltend eine Anhydridgruppe im Ring. Bevorzugte Verbindungen sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Ihre Verwendung wird weiterhin beschrieben in US-A 3538043, US-A 4500704, US-A 5032671, US-A 6646100, EP-A 222453 und WO-A 2008/013731.

In einer Ausführungsform wird die mindestens eine H-funktionelle Startersubstanz mit DMC-Katalysator versetzt und in einen Reaktor gegeben, bzw. es werden die H-funktionelle Startersubstanz und der DMC-Katalysator in einen Reaktor gegeben. Der H-funktionellen Startersubstanz können vor der Zugabe des DMC-Katalysators außerdem zusätzlich geringe Mengen (1 bis 500 ppm) organischer oder anorganischer Säuren zugesetzt werden, wie beispielsweise in WO-A 99/14258 beschrieben.

In einer bevorzugten Verfahrensweise wird der Reaktorinhalt zunächst bei Temperaturen von 60 bis 160 °C, bevorzugt 100 bis 155 °C, ganz besonders bevorzugt 110 bis 155 °C mit Inertgas (Stickstoff oder ein Edelgas wie beispielsweise Argon) über einen Zeitraum von bevorzugt 10 bis 60 min unter Rühren im Reaktor selbst oder gegebenenfalls in einem vorgelagerten Schritt in einem weiteren Apparat gestrippt. Beim Strippen werden flüchtige Bestandteile unter Einleiten von Inertgasen in die Flüssigphase bei gleichzeitig angelegtem Vakuum, bei einem absoluten Druck von 5 bis 500 mbar, entfernt. Die Temperatur kann anschließend auf die Reaktionstemperatur eingestellt werden, sofern diese nicht identisch mit der Stripptemperatur ist. Die endgültige Reaktionstemperatur kann aber auch erst in der Anfangsphase der Alkylenoxiddosierung, beispielsweise unter Nutzung der freiwerdenden Reaktionswärme, eingestellt werden

Bei allen beschriebenen Ausführungsformen kann die Polymerisation, d.h. die Herstellung eines Polyoxyalkylenpolyols durch Anlagerung eines Alkylenoxids an eine H-funktionelle Startersubstanz in Gegenwart eines Doppelmetallcyanid (DMC)-Katalysators bei einer Reaktionstemperatur von 100 °C bis 180 °C durchgeführt werden.

Hierzu werden dem Reaktor kontinuierlich ein oder mehrere Alkylenoxide, ein oder mehrere H-funktionelle Startersubstanzen sowie eine Dispersion des Doppelmetallcyanid (DMC)-Katalysators in einem Dispersionsmittel zugeführt. Da sich typischerweise vor dem Start der Alkylenoxid-Dosierung bereits H-funktionelle Startersubstanzen und DMC Katalysator im Reaktor befinden, beginnt die kontinuierliche Dosierung der H-funktionelle Startersubstanzen und DMC Katalysator in einer bevorzugten Ausführungsform erst nach einer Anfangsphase mit alleiniger Alkylenoxid-Dosierung.

In einer Ausführungsform des erfindungsgemäßen Verfahrens beträgt die Reaktionstemperatur 130 °C bis 170 °C, bevorzugt 140 °C bis 165 °C. Dies ist vorteilhaft, da bei höheren Reaktions- bzw. Prozesstemperaturen von ≥ 130 °C, bevorzugt ≥ 140 °C die Reaktionswärme zur Produktion von Wasserdampf bei höheren Drücken genutzt werden kann. Der erzeugte Wasserdampf ist umso wertvoller, je höher sein Druck ist. Der thermodynamisch maximal erreichbare Wasserdampfdruck nimmt aufgrund der Dampfdruckkurve des Wassers mit steigender Reaktionstemperatur zu. So beträgt der Wasserdampfdruck bei 130 °C 2,7 bar absolut, bei 140 °C 3,6 bar absolut, bei 150 °C 4,8 bar absolut und bei 160 °C 6,2 bar absolut. Der aus der Reaktionswärme der Polymerisation erzeugte Wasserdampf kann für die Kopplung dieses Polymerisationsschrittes mit anderen Verfahrensschritten zur Herstellung von Polyoxyalkylenpolyolen als auch für die (Wärme)Integration mit anderen technisch-chemischen Verfahren genutzt werden. Bei einer Reaktionstemperatur von oberhalb 180 °C nimmt die Reaktionsgeschwindigkeit aufgrund thermischer Deaktivierung des DMC-Katalysators deutlich ab.

Während der Polymerisation können die beschriebenen Temperaturgrenzen variiert werden, beispielsweise kann es sich als vorteilhaft herausstellen die Reaktionstemperatur mit zunehmendem Reaktionsfortschritt anzuheben.

Ebenfalls kann das mindestens eine Alkylenoxid dem Reaktor auf unterschiedliche Weise zugeführt werden: Möglich ist eine Dosierung in die Gasphase oder direkt in die Flüssigphase, z. B. über ein Tauchrohr oder einen in der Nähe des Reaktorbodens in einer gut durchmischten Zone befindlichen Verteilerring. Die Dosierung in die Flüssigphase ist die bevorzugte Variante. Bei Dosierung in die Flüssigphase sollten die Dosieraggregate selbstleerend ausgelegt sein, beispielsweise durch Anbringen der Dosierbohrungen an der Unterseite des Verteilerrings. Die Alkylenoxide werden dem Reaktor kontinuierlich derart zugeführt, dass die sicherheitstechnischen Druckgrenzen des verwendeten Reaktorsystems nicht überschritten werden.

Werden mehrere Alkylenoxide dosiert, können die jeweiligen Alkylenoxide dem Reaktor separat oder als Alkylenoxid-Mischung zugeführt werden. Eine Vermischung der Alkylenoxide kann beispielsweise durch ein in der gemeinsamen Dosierstrecke befindliches Mischaggregat erreicht werden ("inline-blending"). Es hat sich auch bewährt, Alkylenoxide pumpendruckseitig in einen beispielsweise über Wärmetauscher geführten Umpumpkreislauf einzeln oder (vor-)gemischt zu dosieren. Für die gute Durchmischung mit dem Reaktionsmedium ist es dann von Vorteil, ein hochscherendes Mischaggregat in den Alkylenoxid-/Reaktionsmediumstrom zu integrieren. Die Temperatur der exothermen Polymerisation (Alkylenoxidadditionsreaktion) wird durch Kühlung auf dem gewünschten Niveau gehalten bzw. auf das gewünschte Niveau eingestellt. Gemäß dem Stand der Technik zur Auslegung von Polymerisationsreaktoren für exotherme Reaktionen (z.B. Ullmann's Encyclopedia of Industrial Chemistry, Vol. B4, pp 167ff, 5th Ed., 1992) erfolgt eine solche Kühlung im Allgemeinen über die Reaktorwand (z.B. Doppelmantel, Halbrohrschlange) sowie mittels weiterer intern im Reaktor und/oder extern im Umpumpkreislauf angeordneter Wärmetauscherflächen, z.B. an Kühlschlangen, Kühlkerzen, Platten- Rohrbündel- oder Mischerwärmetauschern.

Generell sollte beim Einsatz von gerührten Reaktoren durch Auslegung und Einsatz handelsüblicher Rührorgane für eine gute Durchmischung des Reaktorinhaltes gesorgt werden, wobei hier insbesondere ein- oder mehrstufig angeordnete Rührer oder großflächig über die Füllhöhe wirkende Rührertypen geeignet sind (siehe z. B. Handbuch Apparate; Vulkan-Verlag Essen, 1. Aufl. (1990), S.188 - 208). Technisch besonders relevant ist hierbei eine im Mittel über den gesamten Reaktorinhalt eingetragene spezifische Mischleistung, die im Allgemeinen im Bereich von 0,2 bis 5 W/l liegt, mit entsprechend höheren lokalen Leistungseinträgen im Bereich der Rührorgane selbst und ggf. bei niedrigeren Füllständen. Um eine optimale Rührwirkung zu erzielen, können im Reaktor gemäß allgemeinem Stand der Technik Kombinationen aus Stromstörern (z. B. Flach- oder Rohrstromstörer) und Kühlschlangen (oder Kühlkerzen) angeordnet werden, die sich auch über den Behälterboden erstrecken können. Alternativ ist es auch möglich, die notwendige Durchmischung ausschließlich über einen Wärmetauscher geführten Umpumpkreislauf zu erzielen oder diesen zusätzlich zum Rühraggregat als weitere Mischkomponente zu betreiben, wobei der gesamte Reaktorinhalt nach Bedarf (typischerweise 1 bis 50 mal pro Stunde) umgepumpt wird. Die mittels Umpumpung, beispielsweise über einen außenliegenden Wärmetauscher über diesen oder bei Rückführung in den Reaktor über eine Düse oder Injektor, eingetragene spezifische Mischleistung beläuft sich ebenfalls auf Werte von im Mittel 0,2 bis 5 W/L, wobei diese auf das im Reaktor und den Umpumpkreislauf am Ende der Reaktionsphase befindliche Flüssigkeitsvolumen bezogen ist.

Für die Durchführung des erfindungsgemäßen Verfahrens sind die unterschiedlichsten Reaktortypen geeignet. Vorzugsweise werden zylinderförmige Behälter eingesetzt, welche ein Höhen-/Durchmesserverhältnis von 1:1 bis 10:1 besitzen. Als Reaktorböden kommen beispielsweise Kugel-, Klöpper-, Flach,- oder Konusböden in Frage.

In einer Ausführungsform des erfindungsgemäßen Verfahrens wird das kontinuierlich aus dem Reaktor austretende Reaktionsgemisch kontinuierlich in einen Nachreaktor zur Reduktion des Gehalts an freiem Alkylenoxid überführt, wobei der Gehalt an freiem Alkylenoxid bevorzugt auf Werte von kleiner als 5 ppm reduziert wird. Dieser Nachreaktor, bevorzugt ein Rohrreaktor, wird bei Temperaturen von 80 °C bis 180 °C betrieben, wobei das Reaktionsgemisch im Mittel 10 min bis 60 min im Nachreaktor verweilt. Hierbei erfolgt im Nachreaktor keine weitere Dosierung des Alkylenoxids, der H-funktionellen Startersubstanz und/oder des Doppelmetallcyanid (DMC)-Katalysators. Das Reaktorvolumen des Nachreaktors V_{N} wird in der vorliegenden Patentanmeldung nicht für das Reaktionsvolumen V und somit auch nicht für die Berechnung des Quotienten der Summe der Massenströme ∑*ṁ* aus *ṁ*(*Alkylenoxid*), *ṁ*(*Startersubsanz*) und *ṁ*(*DMC*) zu dem Reaktionsvolumen V berücksichtigt.

Gegebenenfalls kann das nach dem erfindungsgemäßen Verfahren erhaltene Polyoxyalkylenpolyol von kleinen Mengen an nicht umgesetzten Alkylenoxiden im Vakuum, beispielsweise bei einem absoluten Druck von 1 bis 500 mbar, oder durch Strippen vollständig befreit werden. Durch Strippen werden flüchtige Bestandteile, wie beispielsweise (Rest-)Alkylenoxide, unter Einleiten von Inertgasen und/oder Wasserdampf in die Flüssigphase bei gleichzeitig angelegtem Vakuum (beispielsweise durch Durchleiten von Inertgas bei einem Absolutdruck von 5 bis 500 mbar) entfernt. Das Entfernen flüchtiger Bestandteile, wie beispielsweise nicht umgesetzter Alkylenoxide, entweder im Vakuum oder durch Strippen, erfolgt im Allgemeinen bei Temperaturen von 20 bis 200 °C, bevorzugt bei 50 bis 160 °C . Solche Strippvorgänge können auch in sogenannten Strippkolonnen durchgeführt werden, in denen dem Produktstrom ein Inertgas- oder Wasserdampfstrom entgegengeleitet wird. Bevorzugt werden zu diesem Zweck Strippkolonnen mit Füllkörpern oder Einbauten verwendet. Solche Strippvorgänge können auch kontinuierlich durchgeführt werden, indem beispielsweise das nicht gestrippte Material kontinuierlich der Strippkolonne zugeführt wird.

Den nach dem erfindungsgemäßen Verfahren hergestellten Polyoxyalkylenpolyolen können gegebenenfalls Alterungsschutzmittel wie z. B. Antioxidantien zugesetzt werden.

Ein weiterer Gegenstand der vorliegenden Erfindung sind Polyoxalkylenpolyole mit einem Polydispersitätsindex von ≤1,20, erhältlich nach dem erfindungsgemäßen Verfahren, wobei der Polydispersitätsindex mittels der im Experimentalteil offenbarten Gelpermeationschromatographie (GPC) bestimmt worden ist.

Die nach dem erfindungsgemäßen Verfahren erhältlichen Polyoxyalkylenpolyole können allein oder gegebenenfalls im Gemisch mit weiteren isocyanatreaktiven Komponenten mit Polyisocyanaten, gegebenenfalls in Gegenwart von Treibmitteln, gegebenenfalls in Gegenwart von Katalysatoren und gegebenenfalls mit weiteren Zusatzstoffen wie z.B. Zellstabilisatoren umgesetzt werden und so als Komponenten von massiven oder geschäumten Polyurethanen, z. B. Polyurethan-Weichschaum wie beispielsweise Polyurethan-Weichblockschaum und Polyurethan-Weichformschaum, dienen. Die nach dem erfindungsgemäßen Verfahren hergestellten Polyoxyalkylenpolyole können insbesondere auch als Komponenten für Kleb- und Dichtstoffmaterialien verwendet werden. Beispielsweise können sie als Vorläuferpolyole für die Herstellung silanterminierter Polyoxyalkylene dienen, die ihrerseits Einsatz in feuchtigkeitshärtenden Dichtstoffsystemen finden können.

Polyurethane, bevorzugt massive oder geschäumte Polyurethane, insbesondere Polyurethan-Weichschäume wie beispielsweise Polyurethan-Weichblockschäume und Polyurethan-Weichformschäume oder Kleb- und Dichtstoffmaterialien, die die nach dem erfindungsgemäßen Verfahren hergestellten Polyoxyalkylenpolyole enthalten, sind ebenfalls Gegenstand der Erfindung.

In einer ersten Ausführungsform betrifft die Erfindung ein Verfahren zur Herstellung eines Polyoxyalkylenpolyols umfassend die Anlagerung eines Alkylenoxids an eine H-funktionelle Startersubstanz in Gegenwart eines Doppelmetallcyanid (DMC)-Katalysators, wobei das Alkylenoxid mit dem Massenstrom *ṁ*(*Alkylenoxid*), die H-funktionelle Startersubstanz mit dem Massenstrom *ṁ*(*Startersubsanz*) und der Doppelmetallcyanid (DMC)-Katalysator in einem Dispersionsmittel mit dem Massenstrom *ṁ*(*DMC*) während der Reaktion kontinuierlich in den Reaktor mit dem Reaktionsvolumen V dosiert werden und das resultierende Reaktionsgemisch kontinuierlich aus dem Reaktor entfernt wird, und wobei der Quotient der Summe der Massenströme ∑*ṁ* aus *ṁ*(*Alkylenoxid*), *ṁ*(*Startersubsanz*) und *ṁ*(*DMC*) zu dem Reaktionsvolumen V im stationären Zustand größer oder gleich 1200 g/(h·L) ist.

In einer zweiten Ausführungsform betrifft die Erfindung ein Verfahren gemäß der ersten Ausführungsform, wobei der Quotient der Summe der Massenströme ∑*ṁ* aus *ṁ*(*Alkylenoxid*), *ṁ*(*Startersubsanz*) und *ṁ*(*DMC*) zu dem Reaktionsvolumen V im stationären Zustand größer oder gleich 1500 g/(h·L), bevorzugt größer oder gleich 1800 g/(h·L) ist.

In einer dritten Ausführungsform betrifft die Erfindung ein Verfahren gemäß der ersten oder zweiten Ausführungsform, wobei der Quotient der Summe der Massenströme ∑*ṁ* aus *ṁ*(*Alkylenoxid*), *ṁ*(*Startersubsanz*) und *ṁ*(*DMC*) zu dem Reaktionsvolumen V im stationären Zustand kleiner oder gleich 4000 g/(h·L), bevorzugt 3750 g/(h·L) und besonders bevorzugt 3500 g/(h·L) ist.

In einer vierten Ausführungsform betrifft die Erfindung ein Verfahren gemäß einer der ersten bis dritten Ausführungsform, wobei das Reaktionsvolumen V identisch mit dem Reaktorvolumen V_{R} ist.

In einer fünften Ausführungsform betrifft die Erfindung ein Verfahren gemäß einer der ersten bis vierten Ausführungsform, wobei das Polyoxyalkylenpolyol ein Polyetherpolyol ist.

In einer sechsten Ausführungsform betrifft die Erfindung ein Verfahren gemäß einer der ersten bis fünften Ausführungsform, wobei die Konzentration des Doppelmetallcyanid (DMC)-Katalysator 50 ppm oder weniger, bevorzugt 10 ppm bis 50 ppm, besonders bevorzugt 15 ppm bis 40 ppm, bezogen auf die Summe aus Alkylenoxid, H-funktioneller Startersubstanz, Dispersionsmittel und Doppelmetallcyanid (DMC)-Katalysator beträgt.

In einer siebten Ausführungsform betrifft die Erfindung ein Verfahren gemäß einer der ersten bis sechsten Ausführungsform, wobei der Doppelmetallcyanid (DMC)-Katalysator durch Umsetzung einer wässrigen Lösung eines cyanidfreien Metallsalzes, einer wässrigen Lösung eines Metallcyanidsalzes, eines organischen Komplexliganden sowie einer komplexbildenden Komponente erhältlich ist.

In einer achten Ausführungsform betrifft die Erfindung ein Verfahren gemäß der siebten Ausführungsform, wobei die komplexbildende Komponente ein Polyetherpolyol ist, bevorzugt ein Poly(oxypropylen)polyol mit einem zahlenmittleren Molekulargewicht von ≥ 500 g/mol, wobei das zahlenmittlere Molekulargewicht aus der ermittelten OH-Zahl berechnet wird.

In einer neunten Ausführungsform betrifft die Erfindung ein Verfahren gemäß siebten oder achten Ausführungsform, wobei der organischen Komplexligand eine oder mehrere Verbindung(en) ist und ausgewählt wird aus der Gruppe bestehend aus Dimethoxyethan, tert.-Butanol, 2-Methyl-3-buten-2-ol, 2-Methyl-3-butin-2-ol, Ethylenglykol-mono-tert.-butylether und 3-Methyl-3-oxetan-methanol, bevorzugt tert.-Butanol.

In einer zehnten Ausführungsform betrifft die Erfindung ein Verfahren gemäß einer der ersten bis neunten Ausführungsform, wobei die H-funktionelle Startersubstanz eine oder mehrere Verbindung(en) ist und ausgewählt wird aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylol¬propan, di- und trifunktionelle Polyetherpolyole.

In einer elften Ausführungsform betrifft die Erfindung ein Verfahren gemäß einer der ersten bis zehnten Ausführungsform, wobei das Dispersionsmittel die H-funktionelle Startersubstanz gemäß einer der ersten bis zehnten Ausführungsform ist.

In einer zwölften Ausführungsform betrifft die Erfindung ein Verfahren gemäß einer der ersten bis elften Ausführungsform, wobei das Alkylenoxid Ethylenoxid, Propylenoxid oder ein Gemisch aus Ethylenoxid und Propylenoxid ist.

In dreizehnten Ausführungsform betrifft die Erfindung ein Verfahren gemäß einer der ersten bis zwölften Ausführungsform, wobei die Reaktionstemperatur 130 °C bis 170 °C, bevorzugt 140 °C bis 165 °C beträgt.

In einer vierzehnten Ausführungsform betrifft die Erfindung ein Verfahren gemäß einem der ersten bis dreizehnten Ausführungsform, wobei das kontinuierlich aus dem Reaktor austretende Reaktionsgemisch kontinuierlich in einen Nachreaktor zur Reduktion des Gehalts an freiem Alkylenoxid überführt wird.

In einer fünfzehnten Ausführungsform betrifft die Erfindung ein Polyoxyalkylenpolyol erhältlich nach einem der ersten bis vierzehnten Ausführungsform mit einem Polydispersitätsindex von ≤1,20 bestimmt mittels Gelpermeationschromatographie.

In einer sechzehnten Ausführungsform betrifft die Erfindung ein Verfahren zur Herstellung eines Polyurethans durch Umsetzung eines Polyisocyanats mit dem Polyoxyalkylenpolyol gemäß der fünfzehnten Ausführungsform.

In einer siebzehnten Ausführungsform betrifft die Erfindung ein Verfahren gemäß einer der ersten bis vierzehnten Ausführungsform, wobei der der Quotient der Summe der Massenströme ∑*ṁ* aus *ṁ*(*Alkylenoxid*), *ṁ*(*Startersubsanz*) und *ṁ*(*DMC*) zu dem Reaktionsvolumen V im stationären Zustand 1200 g/(h·L) bis 4000 g/(h·L) bevorzugt 1500 g/(h·L) bis 3750 g/(h·L) und besonders bevorzugt von 1800 g/(h·L) bis 3500 g/(h·L) ist.

### Beispiele

Die Bestimmung der OH-Zahlen erfolgte gemäß der Vorschrift der DIN 53240. Die Viskositäten wurden mittels Rotationsviskosimeter (Physica MCR 51, Hersteller: Anton Paar) nach der Vorschrift der DIN 53018 ermittelt.

Das Zahlenmittel Mₙ und das Gewichtsmittel M_{w} des Molekulargewichts sowie der Polydispersitätsindex PDI (M_{w}/Mₙ) der Produkte wurde mittels Gelpermeationschromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1,0 ml/min; Säulen: 2xPSS SDV linear M, 8x300 mm, 5µm; RID-Detektor). Dabei wurden Polystyrolproben bekannter Molmasse zur Kalibrierung verwendet.

### Eingesetzte Rohstoffe

### Katalysator für die Alkylenoxidaddition (DMC-Katalysator):

Doppelmetallcyanid-Katalysator, enthaltend Zinkhexacyanocobaltat, tert.-Butanol und Polypropylenglykol mit einem zahlenmittleren Molekulargewicht von 1000 g/mol; beschrieben in WO-A 01/80994, Beispiel 6.

### Beispiel 1 (Vergleich):

In einen kontinuierlich betriebenen Edelstahl-Druckreaktor mit einem zugänglichen Reaktorvolumen V_{R} von 1,951 Liter gefüllt mit einem Polyetherpolyol (OH-Funktionalität = 2,82; OH-Zahl = 48 mg KOH/g; Verhältnis Propylenoxid/Ethylenoxid = 89,5/10,5; enthaltend 25 ppm DMC-Katalysator) wurden bei einer Temperatur von 150°C unter Rühren (800 U/min) folgende Komponenten mit den angegebenen Massenströmen dosiert:
- Propylenoxid mit 817,50 g/h
- Ethylenoxid mit 95,51 g/h
- Glycerin mit 21,69 g/h
- Dispersion von 0,00613 g DMC-Katalysator in 1 g Propylenglykol mit 3,83 g/h

Die Reaktionsmischung wurde kontinuierlich aus dem Druckreaktor entnommen, wobei der Reaktor stets vollständig mit Flüssigkeit gefüllt war, so dass das Reaktionsvolumen V dem Reaktorvolumen V_{R} entsprach. Zur Vervollständigung der Reaktion wurde das entnommene Reaktionsgemisch kontinuierlich in einen auf 100°C temperierten Nachreaktor (Rohrreaktor mit einem Innenvolumen von 1,0 L) überführt. Nach Verlassen des Nachreaktors wurde das erhaltene Produkt auf Raumtemperatur abgekühlt und anschließend analytisch untersucht. In Tabelle 1 sind die analytischen Werte einer Probe angegeben, die nach einer Gesamtreaktionszeit gezogen wurde, die 12 Verweilzeiten entspricht.

### Beispiel 2 (Vergleich):

Es wurde vorgegangen wie in Beispiel 1 (Vergleich), mit dem Unterschied, dass bei einer Temperatur von 150°C folgende Komponenten mit den angegebenen Massenströmen dosiert wurden:
- Propylenoxid mit 1090,00 g/h
- Ethylenoxid mit 127,88 g/h
- Glycerin mit 28,92 g/h
- Dispersion von 0,00613 g DMC-Katalysator in 1 g Propylenglykol mit 5,10 g/h

### Beispiel 3 (Vergleich):

Es wurde vorgegangen wie in Beispiel 1 (Vergleich), mit dem Unterschied, dass bei einer Temperatur von 150°C folgende Komponenten mit den angegebenen Massenströmen dosiert wurden:
- Propylenoxid mit 1362,50 g/h
- Ethylenoxid mit 159,85 g/h
- Glycerin mit 36,15 g/h
- Dispersion von 0,00613 g DMC-Katalysator in 1 g Propylenglykol mit 6,38 g/h

### Beispiel 4 (Vergleich):

Es wurde vorgegangen wie in Beispiel 1 (Vergleich), mit dem Unterschied, dass bei einer Temperatur von 130°C folgende Komponenten mit den angegebenen Massenströmen dosiert wurden:
- Propylenoxid mit 817,50 g/h
- Ethylenoxid mit 95,51 g/h
- Glycerin mit 21,69 g/h
- Dispersion von 0,00613 g DMC-Katalysator in 1 g Propylenglykol mit 3,83 g/h

### Beispiel 5 (Vergleich):

Es wurde vorgegangen wie in Beispiel 1 (Vergleich), mit dem Unterschied, dass bei einer Temperatur von 130°C folgende Komponenten mit den angegebenen Massenströmen dosiert wurden:
- Propylenoxid mit 1362,50 g/h
- Ethylenoxid mit 159,85 g/h
- Glycerin mit 36,15 g/h
- Dispersion von 0,00613 g DMC-Katalysator in 1 g Propylenglykol mit 6,38 g/h

### Beispiel 6 (Vergleich):

Es wurde vorgegangen wie in Beispiel 1 (Vergleich), mit dem Unterschied, dass bei einer Temperatur von 130°C folgende Komponenten mit den angegebenen Massenströmen dosiert wurden:
- Propylenoxid mit 1635,00 g/h
- Ethylenoxid mit 191,82 g/h
- Glycerin mit 43,38 g/h
- Dispersion von 0,00613 g DMC-Katalysator in 1 g Propylenglykol mit 7,66 g/h

### Beispiel 7:

Es wurde vorgegangen wie in Beispiel 1 (Vergleich), mit dem Unterschied, dass bei einer Temperatur von 130°C folgende Komponenten mit den angegebenen Massenströmen dosiert wurden:
- Propylenoxid mit 3270,00 g/h
- Ethylenoxid mit 383,63 g/h
- Glycerin mit 86,76 g/h
- Dispersion von 0,00613 g DMC-Katalysator in 1 g Propylenglykol mit 15,31 g/h

### Beispiel 8:

Es wurde vorgegangen wie in Beispiel 1 (Vergleich), mit dem Unterschied, dass bei einer Temperatur von 150°C folgende Komponenten mit den angegebenen Massenströmen dosiert wurden:
- Propylenoxid mit 3270,00 g/h
- Ethylenoxid mit 383,63 g/h
- Glycerin mit 86,76 g/h
- Dispersion von 0,00613 g DMC-Katalysator in 1 g Propylenglykol mit 15,31 g/h

### Beispiel 9:

Es wurde vorgegangen wie in Beispiel 1 (Vergleich), mit dem Unterschied, dass bei einer Temperatur von 160°C folgende Komponenten mit den angegebenen Massenströmen dosiert wurden:
- Propylenoxid mit 3270,00 g/h
- Ethylenoxid mit 383,63 g/h
- Glycerin mit 86,76 g/h
- Dispersion von 0,00613 g DMC-Katalysator in 1 g Propylenglykol mit 15,31 g/h

### Beispiel 10:

Es wurde vorgegangen wie in Beispiel 1 (Vergleich), mit dem Unterschied, dass bei einer Temperatur von 150°C folgende Komponenten mit den angegebenen Massenströmen dosiert wurden:
- Propylenoxid mit 3633,33 g/h
- Ethylenoxid mit 426,26 g/h
- Glycerin mit 96,40 g/h
- Dispersion von 0,00613 g DMC-Katalysator in 1 g Propylenglykol mit 17,01 g/h

### Beispiel 11:

Es wurde vorgegangen wie in Beispiel 1 (Vergleich), mit dem Unterschied, dass bei einer Temperatur von 150°C folgende Komponenten mit den angegebenen Massenströmen dosiert wurden:
- Propylenoxid mit 2180,00 g/h
- Ethylenoxid mit 255,75 g/h
- Glycerin mit 57,84 g/h
- Dispersion von 0,00613 g DMC-Katalysator in 1 g Propylenglykol mit 10,21 g/h

### Beispiel 12:

Es wurde vorgegangen wie in Beispiel 1 (Vergleich), mit dem Unterschied, dass bei einer Temperatur von 150°C folgende Komponenten mit den angegebenen Massenströmen dosiert wurden:
- Propylenoxid mit 3924,00 g/h
- Ethylenoxid mit 460,36 g/h
- Glycerin mit 104,11 g/h
- Dispersion von 0,00613 g DMC-Katalysator in 1 g Propylenglykol mit 18,37 g/h

### Beispiel 13:

Es wurde vorgegangen wie in Beispiel 1 (Vergleich), mit dem Unterschied, dass bei einer Temperatur von 150°C folgende Komponenten mit den angegebenen Massenströmen dosiert wurden:
- Propylenoxid mit 4562,79 g/h
- Ethylenoxid mit 535,30 g/h
- Glycerin mit 121,06 g/h
- Dispersion von 0,00613 g DMC-Katalysator in 1 g Propylenglykol mit 21,36 g/h

Die in Tabelle 1 angegebenen Werte für ∑*ṁ* /V [g/(h·L)] (= Quotient der Summe der Massenströme ∑*ṁ* aus *ṁ*(*Alkylenoxid*), *ṁ*(*Startersubsanz*) und *ṁ*(*DMC*) zu dem Reaktionsvolumen V im stationären Zustand) berechnen sich als Quotient aus der Summe der in den obigen Beispielen angegebenen Massenströme (g/h) zu dem Reaktionsvolumen von 1,951 Liter.

Die in Tabelle 1 angegebenen Verweilzeiten (VWZ) sind definiert als Quotient von Reaktionsvolumen V zum austretenden Volumenstrom. Der Volumenstrom berechnet sich als Quotient der Summe der Massenströme zur Dichte des Produkts bei der jeweiligen Reaktionstemperatur:
T = 130°C: Dichte = 0,9486 g/ml
T = 150°C: Dichte = 0,9304 g/ml
T = 160°C: Dichte = 0,9205 g/ml

**Tabelle 1: Zusammenfassung der Ergebnisse**

| **Beispiel** | ∑*ṁ* **/V [g/(h•L)]** | **VWZ [min]** | **Temperatur [°C]** | **Viskosität 25°C / korrigiert [mPas] *** | **PDI [M_{w}/Mₙ]** |
|---|---|---|---|---|---|
| 1 (Vgl.) | 481 | 116 | 150 | 703 | 1,18 |
| 2 (Vgl.) | 642 | 87 | 150 | 694 | 1,13 |
| 3 (Vgl.) | 802 | 70 | 150 | 694 | 1,15 |
| 4 (Vgl.) | 481 | 118 | 130 | 700 | 1,13 |
| 5 (Vgl.) | 802 | 71 | 130 | 693 | 1,12 |
| 6 (Vgl.) | 963 | 59 | 130 | 699 | 1,10 |
| 7 | 1925 | 30 | 130 | 699 | 1,17 |
| 8 | 1925 | 29 | 150 | 708 | 1,15 |
| 9 | 1925 | 29 | 160 | 710 | 1,18 |
| 10 | 2139 | 26 | 150 | 709 | 1,15 |
| 11 | 1283 | 43 | 150 | 721 | 1,15 |
| 12 | 2310 | 24 | 150 | 717 | 1,16 |
| 13 | 2686 | 21 | 150 | 723 | 1,15 |

| | | | | | |
|---|---|---|---|---|---|
| *Korrigierte Viskosität (25°C) = gemessene Viskosität (25°C) + 13 * (OH-Zahl - 48) Vgl. Vergleichsbeispiele | | | | | |

## Patentansprüche

1. Verfahren zur Herstellung eines Polyoxyalkylenpolyols umfassend die Anlagerung eines Alkylenoxids an eine H-funktionelle Startersubstanz in Gegenwart eines Doppelmetallcyanid (DMC)-Katalysators;
wobei das Alkylenoxid mit dem Massenstrom *ṁ*(*Alkylenoxid*), die H-funktionelle Startersubstanz mit dem Massenstrom *ṁ*(*Startersubsanz*) und der Doppelmetallcyanid (DMC)-Katalysator in einem Dispersionsmittel mit dem Massenstrom *m*(*DMC*) während der Reaktion kontinuierlich in den Reaktor mit dem Reaktionsvolumen V dosiert werden und das resultierende Reaktionsgemisch kontinuierlich aus dem Reaktor entfernt wird;
und wobei der Quotient der Summe der Massenströme ∑*ṁ* aus *ṁ*(*Alkylenoxid*), *ṁ*(*Startersubsanz*) und *ṁ*(*DMC*) zu dem Reaktionsvolumen V im stationären Zustand größer oder gleich 1200 g/(h·L) ist.

2. Verfahren gemäß Anspruch 1, wobei der Quotient der Summe der Massenströme ∑*ṁ* aus *ṁ*(*Alkylenoxid*), *ṁ*(*Startersubsanz*) und *ṁ*(*DMC*) zu dem Reaktionsvolumen V im stationären Zustand größer oder gleich 1500 g/(h·L), bevorzugt größer oder gleich 1800 g/(h·L) ist

3. Verfahren gemäß Anspruch 1 oder 2, wobei der Quotient der Summe der Massenströme ∑*ṁ* aus *ṁ*(*Alkylenoxid*), *ṁ*(*Startersubsanz*) und *ṁ*(*DMC*) zu dem Reaktionsvolumen V im stationären Zustand kleiner oder gleich 4000 g/(h·L), bevorzugt 3750 g/(h·L) und besonders bevorzugt 3500 g/(h·L) ist.

4. Verfahren gemäß einem der Ansprüche 1 bis 3, wobei das Reaktionsvolumen V identisch mit dem Reaktorvolumen V_{R} ist.

5. Verfahren gemäß einem der Ansprüche 1 bis 4, wobei das Polyoxyalkylenpolyol ein Polyetherpolyol ist.

6. Verfahren gemäß einem der Ansprüche 1 bis 5, wobei die Konzentration des Doppelmetallcyanid (DMC)-Katalysator 50 ppm oder weniger, bevorzugt 10 ppm bis 50 ppm, besonders bevorzugt 15 ppm bis 40 ppm, bezogen auf die Summe aus Alkylenoxid, H-funktioneller Startersubstanz, Dispersionsmittel und Doppelmetallcyanid (DMC)-Katalysator beträgt.

7. Verfahren gemäß einem der Ansprüche 1 bis 6, wobei der Doppelmetallcyanid (DMC)-Katalysator durch Umsetzung einer wässrigen Lösung eines cyanidfreien Metallsalzes, einer wässrigen Lösung eines Metallcyanidsalzes, eines organischen Komplexliganden sowie einer komplexbildenden Komponente erhältlich ist.

8. Verfahren gemäß Anspruch 7, wobei die komplexbildende Komponente ein Polyetherpolyol ist, bevorzugt ein Poly(oxypropylen)polyol mit einem zahlenmittleren Molekulargewicht von ≥ 500 g/mol, wobei das zahlenmittlere Molekulargewicht aus der ermittelten OH-Zahl berechnet wird.

9. Verfahren gemäß Anspruch 7 oder 8, wobei der organischen Komplexligand eine oder mehrere Verbindung(en) ist und ausgewählt wird aus der Gruppe bestehend aus Dimethoxyethan, tert.-Butanol, 2-Methyl-3-buten-2-ol, 2-Methyl-3-butin-2-ol, Ethylenglykol-mono-tert.-butylether und 3-Methyl-3-oxetan-methanol, bevorzugt tert.-Butanol.

10. Verfahren gemäß einem der Ansprüche 1 bis 9, wobei die H-funktionelle Startersubstanz eine oder mehrere Verbindung(en) ist und ausgewählt wird aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylol¬propan, di- und trifunktionelle Polyetherpolyole.

11. Verfahren gemäß einem der Ansprüche 1 bis 10, wobei das Dispersionsmittel die H-funktionelle Startersubstanz gemäß einem der Ansprüche 1 bis 10 ist.

12. Verfahren gemäß einem der Ansprüche 1 bis 11, wobei das Alkylenoxid Ethylenoxid, Propylenoxid oder ein Gemisch aus Ethylenoxid und Propylenoxid ist.

13. Verfahren gemäß einem der Ansprüche 1 bis 12, wobei die Reaktionstemperatur 130 °C bis 170 °C, bevorzugt 140 °C bis 165 °C beträgt.

14. Verfahren gemäß einem der Ansprüche 1 bis 13, wobei das kontinuierlich aus dem Reaktor austretende Reaktionsgemisch kontinuierlich in einen Nachreaktor zur Reduktion des Gehalts an freiem Alkylenoxid überführt wird.

15. Polyoxyalkylenpolyol erhältlich nach einem der Ansprüche 1 bis 14 mit einem Polydispersitätsindex von ≤1,20 bestimmt mittels Gelpermeationschromatographie.
